# EUROPEAN PATENT SPECIFICATION

(11) **EP 4 335 663 B1**
(45) Date of publication and mention of the grant of the patent: **16.07.2025**
(21) Application number: 23189069.0
(22) Date of filing: 01.08.2023
(51) Int. Cl.: B60C 11/03, B60C 11/11, B60C 11/12

(54) **TIRE**
REIFEN
PNEUMATIQUE

(30) Priority: 09.09.2022 JP 2022143838
(43) Date of publication of application: 13.03.2024
(73) Proprietor: Sumitomo Rubber Industries, Ltd., Kobe-shi, Hyogo 651-0072 (JP)
(72) Inventor: NAKANO, Toshiyuki, Kobe-shi, 651-0072 (JP); MAEDA, Yoshiyuki, Kobe-shi, 651-0072 (JP)
(74) Representative: Manitz Finsterwald Patent- und Rechtsanwaltspartnerschaft mbB

(56) References cited:
- JP-A- 2004 058 754
- JP-A- 2008 037 263
- JP-A- 2019 130 929
- KR-A- 20110 021 661

## Description

### BACKGROUND OF THE INVENTION

### Field of the Invention

The present invention relates to a tire.

### Background Art

Japanese Laid-Open Patent Publication No. 2019-130929 describes a tire including a tread portion having a designated rotation direction and a designated mounting direction to a vehicle. The tread portion of the tire has a plurality of inclined grooves extending from an outer tread end to an inner tread end and inclined in the rotation direction relative to the tire axial direction from the outer tread end toward the inner tread end, and a plurality of dividing grooves dividing each of land portions demarcated by the plurality of inclined grooves, into a plurality of blocks in the tire axial direction. In addition, the plurality of inclined grooves each have a smooth curve shape and are curved so as to be convex in the rotation direction over the entire section from the outer tread end to the inner tread end. Furthermore, in each of the land portions, the plurality of blocks include a plurality of longitudinally elongated blocks in each of which a length thereof along the dividing groove is larger than a length thereof along the inclined groove.

The above-described tire may have reduced side grip at a specific slip angle, so that there is room for improvement in controllability during cornering. Related technologies are also known from KR2011 0021661 A, JP 2008 037263 A, JP 2004 058754 A, and EP 3 517 322 A1.

The present invention has been made in view of the above circumstances, and a main object of the present invention is to provide a tire having improved controllability during cornering.

### SUMMARY OF THE INVENTION

The present invention is set out in the appended claims.

As a result of adopting the above configuration, the tire according to the present invention can have improved controllability during cornering.

### BRIEF DESCRIPTION OF THE DRAWINGS

FIG. 1 is a development of a tread portion of a tire according to an embodiment of the present invention;
FIG. 2 is an enlarged view showing the contours of a lateral groove and circumferential grooves demarcating a first block group and a second block group in FIG. 1;
FIG. 3 is an enlarged view of the first block group and the second block group in FIG. 1;
FIG. 4 is an enlarged view of a block pair consisting of the first crown block and the second crown block adjacent to each other in a tire circumferential direction;
FIG. 5 is an enlarged view of a recessed block;
FIG. 6 is an enlarged view of a longitudinally elongated block arrangement region of the second block group;
FIG. 7 is a cross-sectional view taken along a line A-A in FIG. 6; and
FIG. 8 is a development of a tread portion of a tire of a comparative example.

### DETAILED DESCRIPTION

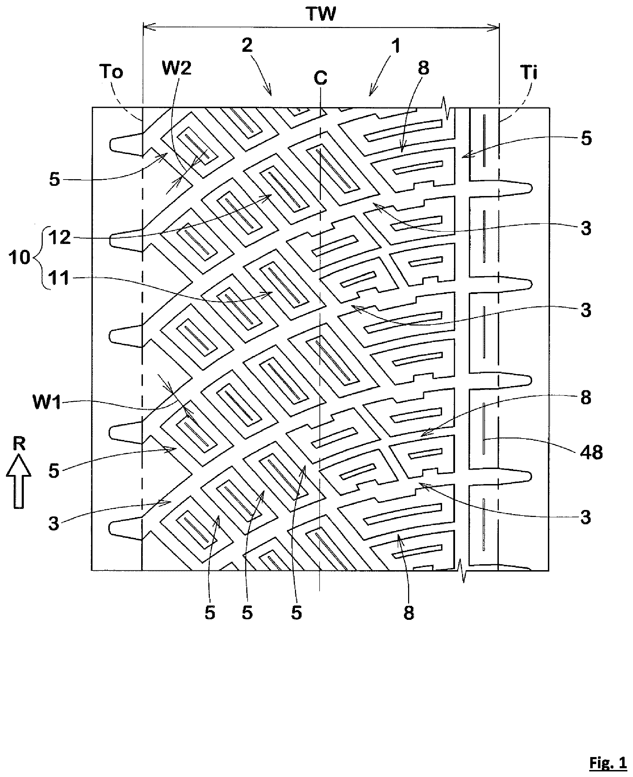

Hereinafter, an embodiment of the present invention will be described with reference to the drawings. FIG. 1 is a development of a tread portion 2 of a tire 1 showing the embodiment of the present invention. As shown in FIG. 1, the tire 1 according to the present embodiment is a pneumatic tire for a passenger car, and is used as a pneumatic tire, for running on rough terrain, that is suitable for a dirt trial and a rally. However, the present invention is not limited to such a category of tires. In addition, a known internal structure is applied to the tire according to the present invention, and the description thereof is omitted in the present specification.

As shown in FIG. 1, the tread portion 2 has a designated mounting direction to a vehicle. Accordingly, the tread portion 2 includes an outer tread end To intended to be located on the outer side of the vehicle when the tire 1 is mounted to the vehicle, and an inner tread end Ti intended to be located on the inner side of the vehicle when the tire 1 is mounted to the vehicle. As a more preferable mode, the tire 1 according to the present embodiment also has a designated rotation direction R. The mounting direction to the vehicle and the rotation direction R of the tire 1 are indicated, for example, by characters, marks, or the like on a sidewall portion or the like of the tire 1.

The outer tread end To and the inner tread end Ti respectively correspond to ends of a ground-contact surface obtained when 70% of a standardized load is applied to the tire 1 in a standardized state and the tread portion 2 is brought into contact with a flat surface at a camber angle of 0°.

In the case of a pneumatic tire for which various standards are defined, the "standardized state" is a state where the tire is fitted on a standardized rim and inflated to a standardized internal pressure and no load is applied to the tire. In the case of a non-pneumatic tire or a tire for which various standards are not defined, the standardized state means a standard use state, corresponding to the purpose of use of the tire, where the tire is not mounted on a vehicle and no load is applied to the tire. In the present description, unless otherwise specified, dimensions and the like of components of the tire are values measured in the standardized state.

The "standardized rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "standardized internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

In the case of a pneumatic tire for which various standards are defined, the "standardized load" is a load that is defined, in a standard system including a standard on which the tire is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard. In addition, in the case of a tire for which various standards are not defined, the "standardized load" refers to the maximum load applicable when the tire is used, according to the above-described standards.

The tread portion 2 of the tire 1 includes a plurality of lateral grooves 3 and a plurality of circumferential grooves 5. Each of the plurality of lateral grooves 3 continuously extends from the outer tread end To to the inner tread end Ti. Each of the plurality of circumferential grooves 5 extends in a direction crossing the lateral grooves 3.

Each lateral groove 3 of the present embodiment is inclined in a first direction relative to the tire axial direction from the outer tread end To to the inner tread end Ti. Specifically, the lateral groove 3 is inclined to the rotation direction R side from the outer tread end To toward the inner tread end Ti. In addition, each lateral groove 3 has an arc shape that is convex toward the first direction (in the present embodiment, the rotation direction R) in the tire circumferential direction from the outer tread end To to the inner tread end Ti. Accordingly, an angle of the lateral groove 3 with respect to the tire axial direction decreases toward the inner tread end Ti side. In a tread plan view, an angle, with respect to the tire axial direction, of a virtual straight line (not shown) connecting the point of intersection of a groove center line of the lateral groove 3 and the outer tread end To to the point of intersection of the groove center line of the lateral groove 3 and the inner tread end Ti is, for example, 10 to 25°. However, the lateral groove 3 is not limited to such a mode.

A plurality of circumferential grooves 5 are provided between two lateral grooves 3 adjacent to each other in the tire circumferential direction. Each circumferential groove 5 is connected to the lateral grooves 3 on both sides in the length direction thereof. In the present embodiment, the circumferential groove 5 provided closest to the inner tread end Ti extends parallel to the tire circumferential direction, and a plurality of such circumferential grooves 5 are arranged in the tire circumferential direction, thereby forming one circumferential groove continuously extending in the tire circumferential direction on the inner tread end Ti side. The circumferential grooves 5 provided on the outer tread end To side with respect to this circumferential groove extend so as to be inclined in a direction opposite to the lateral groove 3 relative to the tire axial direction (i.e., a second direction relative to the tire axial direction). A maximum angle of these circumferential grooves 5 with respect to the tire axial direction is, for example, 40 to 55°. In addition, each circumferential groove 5 extends in a straight manner. However, the circumferential groove 5 is not limited to such a mode.

A groove width W1 of each lateral groove 3 and a groove width W2 of each circumferential groove 5 are each set to 3.5% to 5.0% of a tread width TW. The tread width TW corresponds to the distance in the tire axial direction from the outer tread end To to the inner tread end Ti in the standardized state.

In the present embodiment, in a region between a tire equator C and the inner tread end Ti and between two lateral grooves 3 adjacent to each other in the tire circumferential direction, a sub-lateral groove 8 is provided so as to extend along these lateral grooves 3.

Each region between the lateral grooves 3 adjacent to each other in the tire circumferential direction and between the outer tread end To and the inner tread end Ti forms a block group 10 in which a plurality of blocks are arranged. The block group 10 includes a first block group 11 and a second block group 12 which have different block arrangements. In the present embodiment, the first block group 11 and the second block group 12 are arranged alternately in the tire circumferential direction.

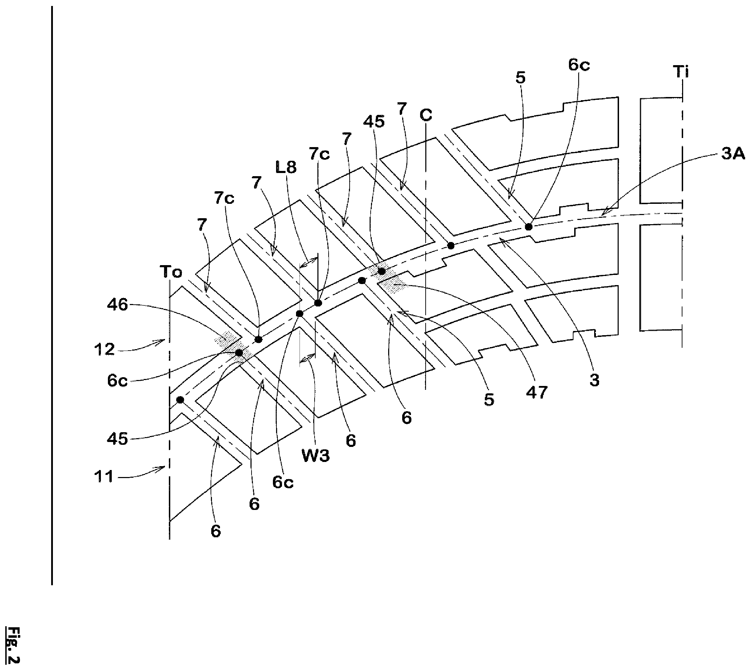

FIG. 2 shows an enlarged view showing the contours of the lateral groove 3 and the circumferential grooves 5 demarcating the first block group 11 and the second block group 12. In FIG. 2, a termination groove (described later) formed on the ground-contact surface of each block is not shown. As shown in FIG. 2, the first block group 11 and the second block group 12 are adjacent to each other across one of the plurality of lateral grooves 3. Hereinafter, this lateral groove 3 is sometimes referred to as first lateral groove 3A.

In the first block group 11, a plurality of first circumferential grooves 6 are formed as a plurality of circumferential grooves 5 demarcating the blocks thereof. Each first circumferential groove 6 communicates with the first lateral groove 3A. In addition, in the second block group 12, a plurality of second circumferential grooves 7 are formed as a plurality of circumferential grooves 5 demarcating the blocks thereof. Each second circumferential groove 7 communicates with the first lateral groove 3A.

A connection position 6c of each of the plurality of first circumferential grooves 6 to the first lateral groove 3A and a connection position 7c of each of the plurality of second circumferential grooves 7 to the first lateral groove 3A are different from each other in the length direction of the lateral groove 3.

In the above-described configuration, the connection position 6c of each first circumferential groove 6 to the first lateral groove 3A means the point of intersection of an extension line of a groove center line of the first circumferential groove 6 and a groove center line of the first lateral groove 3A. Similarly, the connection position 7c of each second circumferential groove 7 to the first lateral groove 3A means the point of intersection of an extension line of a groove center line of the second circumferential groove 7 and the groove center line of the first lateral groove 3A.

In the tire 1 according to the present invention, as a result of adopting the above configuration, each first circumferential groove 6 and each second circumferential groove 7 are not linearly contiguous to each other, so that a reduction in side grip at a specific slip angle can be effectively suppressed. Therefore, the tire 1 according to the present invention can stably provide side grip at any slip angle and improve controllability during cornering.

Hereinafter, more detailed configurations of the present embodiment will be described. The configurations described below show a specific mode of the present embodiment. Therefore, it is needless to say that the present invention can achieve the above-described effect even when the configurations described below are not provided. In addition, even when any one of the configurations described below is independently applied to the tire 1 according to the present invention having the above-described characteristics, performance improvement corresponding to each configuration can be expected. Furthermore, when some of the configurations described below are applied in combination, complex performance improvement corresponding to each configuration can be expected.

Each of the plurality of first circumferential grooves 6 and the plurality of second circumferential grooves 7 includes a connection portion 45 to the first lateral groove 3A. The connection portion 45 means a virtual straight line connecting two points of intersection of the groove edge of the first lateral groove 3A and the groove edges of the circumferential groove. In a preferable mode, in a tread plan view, each of virtual extension lines of the groove center lines of the plurality of first circumferential grooves 6 does not overlap any of the connection portions 45 of the plurality of second circumferential grooves 7. Similarly, each of virtual extension lines of the groove center lines of the plurality of second circumferential grooves 7 does not overlap any of the connection portions 45 of the plurality of first circumferential grooves 6. Accordingly, the above-described effects are reliably achieved.

More specifically, in a tread plan view, the overlap length between each of first regions 46 obtained by virtually extending the connection portions 45 of the plurality of first circumferential grooves 6 in the length direction of the first circumferential grooves 6 (one first region 46 is dotted in FIG. 2) and each of the connection portions 45 of the plurality of second circumferential grooves 7 is preferably not greater than 30% of the groove width of the connection portion 45 of the second circumferential groove 7, and is more preferably substantially 0.

In a tread plan view, the overlap length between each of second regions 47 obtained by virtually extending the connection portions 45 of the plurality of second circumferential grooves 7 in the length direction of the second circumferential grooves 7 (one second region 47 is dotted in FIG. 2) and each of the connection portions 45 of the plurality of first circumferential grooves 6 is preferably not greater than 30% of the groove width of the connection portion 45 of the first circumferential groove 6, and is more preferably substantially 0. Accordingly, controllability during cornering can be further improved.

To increase the grip on rough terrain, it is preferable to place the adjacent first circumferential groove 6 and second circumferential groove 7 so as to be close to each other to some extent such that these grooves can cooperate to provide grip. From such a viewpoint, as for the adjacent first circumferential groove 6 and second circumferential groove 7, a distance L8 (distance along the groove center line of the first lateral groove 3A) between the connection position 6c of the first circumferential groove 6 to the first lateral groove 3A and the connection position 7c of the second circumferential groove 7 to the first lateral groove 3A is preferably 100% to 150% of a groove width W3 of each connection portion 45 of these circumferential grooves.

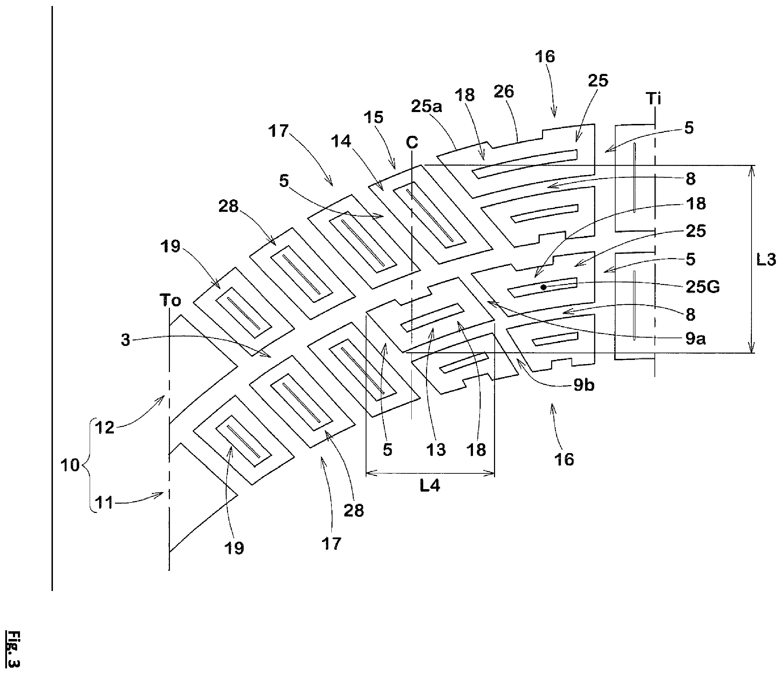

Hereinafter, a further specific configuration of each block will be described. FIG. 3 shows an enlarged view of the first block group 11 and the second block group 12. As shown in FIG. 3, the first block group 11 includes a first crown block 13 on the inner side in the tire axial direction with respect to the outer tread end To and the inner tread end Ti. The first crown block 13 is arranged in the vicinity of the tire equator C, and preferably arranged on the tire equator C. The first crown block 13 of the present embodiment has a ground-contact surface with a largest length on the tire equator C among a plurality of blocks included in the first block group 11. Therefore, a large ground-contact pressure acts on the first crown block 13. Therefore, the first crown block 13 has a large influence on side grip and traction performance.

Similarly, the second block group 12 includes a second crown block 14 on the inner side in the tire axial direction with respect to the outer tread end To and the inner tread end Ti. The second crown block 14 is arranged in the vicinity of the tire equator C, and preferably arranged on the tire equator C. The second crown block 14 of the present embodiment has a ground-contact surface with a largest length on the tire equator C among a plurality of blocks included in the second block group 12. Therefore, a large ground-contact pressure acts on the second crown block 14. Therefore, the second crown block 14 has a large influence on side grip and traction performance.

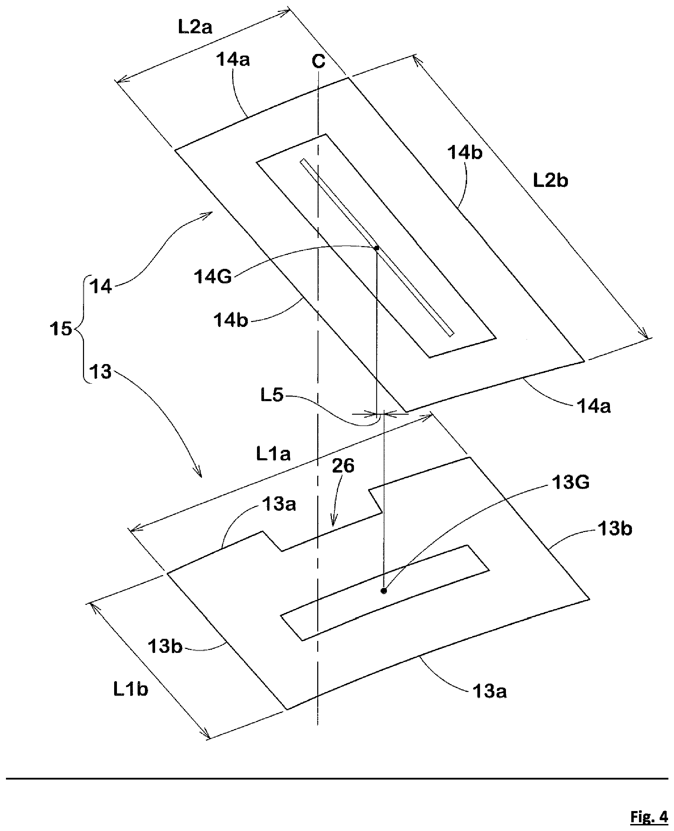

FIG. 4 shows an enlarged view of a block pair 15 consisting of the first crown block 13 and the second crown block 14 adjacent to each other in the tire circumferential direction. As shown in FIG. 4, in the present embodiment, the ground-contact surface of the first crown block 13 includes at least one first lateral edge 13a defined by the lateral groove 3 and at least one first circumferential edge 13b defined by the circumferential groove 5. In the present embodiment, an edge defined by the sub-lateral groove 8 is also included in the first lateral edge 13a. In addition, the at least one first lateral edge 13a is formed longer than the at least one first circumferential edge 13b.

Meanwhile, the ground-contact surface of the second crown block 14 includes at least one second lateral edge 14a defined by the lateral groove 3 and at least one second circumferential edge 14b defined by the circumferential groove 5. In addition, the at least one second circumferential edge 14b is formed longer than the at least one second lateral edge 14a.

In the present embodiment, as for the first crown block 13 on which a large ground-contact pressure acts, since the first lateral edge 13a is formed longer than the first circumferential edge 13b, the first lateral edge 13a provides a large grip in the tire circumferential direction, so that traction performance is improved. Meanwhile, as for the second crown block 14 on which a large ground-contact pressure acts, since the second circumferential edge 14b is formed longer than the second lateral edge 14a, the second circumferential edge 14b provides a large grip in the tire axial direction, so that side grip is improved. Accordingly, in the present embodiment, traction performance can be further improved while side grip is maintained.

The ground-contact surface of the first crown block 13 of the present embodiment includes two first lateral edges 13a and two first circumferential edges 13b. When the two first lateral edges 13a are observed excluding a recess 26 described later, the two first lateral edges 13a are arranged at angles close to each other, with respect to the tire axial direction. Specifically, the angle difference between the two first lateral edges 13a is set to be not greater than 10°. Similarly, the two first circumferential edges 13b are arranged at angles close to each other, with respect to the tire axial direction. Specifically, the angle difference between the two first circumferential edges 13b is set to be not greater than 5°. If each edge is curved, the angle is measured with a straight line connecting both ends of the edge. By including such two first lateral edges 13a and two first circumferential edges 13b, the first crown block 13 has a substantially parallelogram shape. Hereinafter, a block in which a lateral edge of a ground-contact surface is larger than a circumferential edge of the ground-contact surface as in the first crown block 13 is sometimes referred to as laterally elongated block.

The ground-contact surface of the second crown block 14 of the present embodiment includes two second lateral edges 14a and two second circumferential edges 14b. The two second lateral edges 14a are arranged at angles close to each other, with respect to the tire axial direction. Specifically, the angle difference between the two second lateral edges 14a is set to be not greater than 10°. If each second lateral edge 14a is curved, the angle is measured with a straight line connecting both ends of the second lateral edge 14a. Similarly, the two second circumferential edges 14b are arranged at angles close to each other, with respect to the tire axial direction. Specifically, the angle difference between the two second circumferential edges 14b is set to be not greater than 5°. By including such two second lateral edges 14a and the two second circumferential edges 14b, the second crown block 14 has a substantially parallelogram shape. Hereinafter, a block in which a circumferential edge of a ground-contact surface is larger than a lateral edge of the ground-contact surface as in the second crown block 14 is sometimes referred to as longitudinally elongated block.

An actual length L1a of the first lateral edge 13a is preferably not less than 150% and more preferably not less than 170%, and is preferably not greater than 250% and more preferably not greater than 200%, of an actual length L1b of the first circumferential edge 13b. In the present specification, an actual length of an edge means a so-called periphery length along the length direction of the edge. A dimension line indicating the actual length L1a in FIG. 4 omits a shape along the recess of the edge. When the length of the edge is defined as described above, the stiffness in the tire axial direction and the tire circumferential direction of the first crown block 13 is made appropriate, so that side grip and traction performance are improved in a well-balanced manner.

From the same viewpoint, an actual length L2b of the second circumferential edge 14b is preferably not less than 150% and more preferably not less than 170%, and is preferably not greater than 250% and more preferably not greater than 200%, of an actual length L2a of the second lateral edge 14a.

In a preferable mode, the tread portion 2 is formed such that the block pair 15 consisting of the first crown block 13 and the second crown block 14 adjacent to each other in the tire circumferential direction constantly appears on a ground-contact surface in a load-applied rolling state of the tire 1. Accordingly, side grip and traction performance are improved in a well-balanced manner. The "ground-contact surface in a load-applied rolling state of the tire 1" means a ground-contact surface of the tire 1 in a state where a vehicle runs at a constant speed. The ground-contact surface may be regarded as being the same as a ground-contact surface obtained when 70% of the standardized load is applied to the tire 1 in the standardized state and the tread portion 2 is brought into contact with a flat surface at a camber angle of 0°, for example.

From the viewpoint of improving side grip and traction performance while maintaining the stiffness of each block, as shown in FIG. 3, a maximum length L3 in the tire circumferential direction of the block pair 15 is preferably not less than 50% and more preferably not less than 55%, and is preferably not greater than 100% and more preferably not greater than 80%, of the maximum length (not shown) in the tire circumferential direction of the ground-contact surface in the load-applied rolling state.

As for the block pair 15, as the distance in the tire axial direction between the first crown block 13 and the second crown block 14 is shorter, these blocks can cooperate to exhibit better side grip and traction performance. From such a viewpoint, as shown in FIG. 4, a distance L5 in the tire axial direction between a center of gravity 13G of the ground-contact surface of the first crown block 13 and a center of gravity 14G of the ground-contact surface of the second crown block 14 is preferably not greater than 10% of a length L4 (shown in FIG. 3) in the tire axial direction of the block pair 15. The "center of gravity of the ground-contact surface" corresponds to the center of gravity of the ground-contact surface when the ground-contact surface is treated as a plane figure. In the case where a groove, a sipe, and the like are provided on the ground-contact surface, the center of gravity is determined on a flat surface obtained by filling the groove, the sipe, and the like.

As shown in FIG. 3, each of the first block group 11 and the second block group 12 includes a laterally elongated block arrangement region 16 and a longitudinally elongated block arrangement region 17.

The laterally elongated block arrangement region 16 of the first block group 11 of the present embodiment includes four laterally elongated blocks 18. These four laterally elongated blocks 18 are demarcated by the circumferential groove 5 closest to the inner tread end Ti and extending parallel to the tire circumferential direction, the circumferential groove 5 traversing the tire equator C, the sub-lateral groove 8 connected to these circumferential grooves 5, a first sub-circumferential groove 9a extending from the sub-lateral groove 8 to the lateral groove 3 on one side in the tire circumferential direction, and a second sub-circumferential groove 9b extending from the sub-lateral groove 8 to the lateral groove 3 (not shown) on the other side in the tire circumferential direction. In the present embodiment, one of the four laterally elongated blocks 18 included in the first block group 11 is formed as the first crown block 13.

The longitudinally elongated block arrangement region 17 of the first block group 11 of the present embodiment includes three longitudinally elongated blocks 19. These three longitudinally elongated blocks 19 are demarcated between the four circumferential grooves 5 provided between the tire equator C and the outer tread end To.

The laterally elongated block arrangement region 16 of the second block group 12 of the present embodiment includes two laterally elongated blocks 18. These two laterally elongated blocks 18 are demarcated by the circumferential groove 5 closest to the inner tread end Ti and extending parallel to the tire circumferential direction, the circumferential groove 5 adjacent to the tire equator C side of this circumferential groove 5, and the sub-lateral groove 8 connecting these circumferential grooves 5.

The longitudinally elongated block arrangement region 17 of the second block group 12 of the present embodiment includes four longitudinally elongated blocks 19. These four longitudinally elongated blocks 19 are demarcated between the five circumferential grooves 5 provided on the outer tread end To side with respect to the laterally elongated block arrangement region 16. In the present embodiment, one of the four longitudinally elongated blocks 19 included in the second block group 12 is formed as the second crown block 14.

In the present embodiment, the length in the tire axial direction of the laterally elongated block arrangement region 16 of the first block group 11 is larger than the length in the tire axial direction of the laterally elongated block arrangement region 16 of the second block group 12. In addition, the length in the tire axial direction of the longitudinally elongated block arrangement region 17 of the first block group 11 is smaller than the length in the tire axial direction of the longitudinally elongated block arrangement region 17 of the second block group 12. Accordingly, side grip and traction performance are improved in a well-balanced manner.

Each of the first block group 11 and the second block group 12 includes at least one recessed block 25. In a ground-contact surface of the recessed block 25, the recess 26 is formed so as to be locally recessed at a lateral edge 25a defined by the lateral groove 3. The recess 26 of such a recessed block 25 provides a frictional force in the tire axial direction, so that side grip can be improved. Also, each of the first block group 11 and the second block group 12 includes at least one non-recessed block 28 not having the recess 26.

The first block group 11 includes two recessed blocks 25 adjacent to each other in the tire axial direction. The first block group 11 also includes two recessed blocks 25 adjacent to each other in the tire circumferential direction. In a preferable mode, in the first block group 11, each of the four laterally elongated blocks 18 arranged in the laterally elongated block arrangement region 16 is formed as the recessed block 25.

The second block group 12 includes two recessed blocks 25 adjacent to each other in the tire circumferential direction. In a preferable mode, in the second block group 12, each of the two laterally elongated blocks 18 arranged in the laterally elongated block arrangement region 16 is formed as the recessed block 25.

As described above, in each of the first block group 11 and the second block group 12 of the present embodiment, each of the laterally elongated blocks 18 arranged in the laterally elongated block arrangement region 16 is formed as the recessed block 25. As a result, the number of recessed blocks 25 included in the first block group 11 is larger than the number of recessed blocks 25 included in the second block group 12. Accordingly, each laterally elongated block 18 also contributes to improvement of side grip, so that side grip and traction performance are improved in a well-balanced manner.

In a preferable mode, a center of gravity 25G of a ground-contact surface of each recessed block 25 is located between the tire equator C and the inner tread end Ti. Accordingly, a large ground-contact pressure acts on the recessed block 25, and side grip is reliably improved.

Meanwhile, in each of the first block group 11 and the second block group 12, each of the longitudinally elongated blocks 19 arranged in the longitudinally elongated block arrangement region 17 is formed as the non-recessed block 28. Accordingly, the stiffness of each longitudinally elongated block 19 is maintained, so that uneven wear thereof is suppressed.

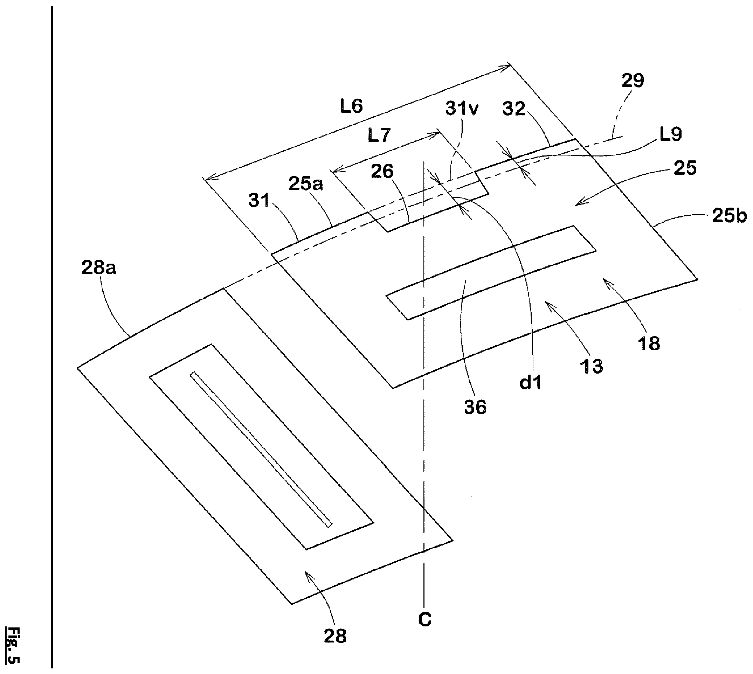

FIG. 5 shows an enlarged view of the first crown block 13 as a diagram for describing the recessed block 25. As shown in FIG. 5, the ground-contact surface of the recessed block 25 includes the lateral edge 25a defined by the lateral groove 3 and a circumferential edge 25b defined by the circumferential groove 5. The recess 26 of the recessed block 25 is formed at a center portion of the lateral edge 25a. Specifically, in a tread plan view, the center position of the actual length of the lateral edge 25a is located in the recess 26. Accordingly, uneven wear of the recessed block 25 is suppressed.

The lateral edge 25a of the recessed block 25 includes an arc-shaped first portion 31, a second portion 32 extending substantially on an extension line obtained by virtually extending the first portion 31, and the recess 26 recessed from the first portion 31 and the second portion 32. In addition, a maximum recess amount d1 of the recess 26 from the first portion 31 is 2.0 to 5.0 mm. Moreover, the maximum depth in the tire radial direction of the recess 26 is preferably not less than 50% and more preferably not less than 80% of the maximum depth of the lateral groove 3 (shown in FIG. 2) to which the recess 26 is connected. As a further preferable mode, the maximum depth in the tire radial direction of the recess 26 is equal to the depth of the lateral groove 3. Such a recessed block 25 can provide a large side grip while suppressing uneven wear thereof. The maximum recess amount d1 corresponds to the maximum distance from an extension line 31v obtained by virtually extending the first portion 31 to the bottom of the recess 26 in a tread plan view.

In a preferable mode, the first portion 31 and the second portion 32 of the recessed block 25 extend substantially on an extension line 29 obtained by virtually extending a lateral edge 28a of the non-recessed block 28. This configuration means a mode in which the first portion 31 and the second portion 32 extend along the extension line 29 and a maximum distance L9 between the first and second portions 31 and 32 and the extension line 29 is not greater than 2.0 mm. In a preferable mode, the distance L9 is not greater than 1.0 mm. In addition, at least parts of the first portion 31 and the second portion 32 preferably overlap the extension line 29, and the length of the overlapping parts is more preferably not less than 50% of the total length of the first portion 31 and the second portion 32. Accordingly, uneven wear of the recessed block 25 is reliably suppressed.

The ground-contact surface of the recessed block 25 includes a virtual lateral edge defined by the lateral groove 3 in a state where the recess 26 is filled. In addition, a length L7, along the lateral groove 3, of the recess 26 is 25% to 50% of a length L6, along the lateral groove 3, of the virtual lateral edge. Accordingly, side grip can be improved while uneven wear of the first portion 31 and the second portion 32 is suppressed. The "state where the recess 26 is filled" is a state where the first portion 31 and the second portion 32 form one straight line or a curved line having a constant curvature and a side wall on the recess 26 side of the recessed block 25 has a smooth flat or curved surface.

The ground-contact surface of the recessed block 25 (synonymous with the laterally elongated block 18 in the present embodiment) has one first termination groove 36 terminating without being connected at both ends thereof to the lateral groove 3 and the circumferential groove 5. The first termination groove 36 is, for example, inclined in the same direction as the lateral groove 3 (not shown in FIG. 5), and extends along the lateral groove 3 in the present embodiment. Specifically, the difference between an angle of the first termination groove 36 with respect to the tire axial direction and the angle of the lateral groove 3 with respect to the tire axial direction is not greater than 5°. The maximum depth of the first termination groove 36 is, for example, 10% to 25% and preferably 15% to 20% of the maximum depth of the lateral groove 3. Such a first termination groove 36 serves to enhance traction on rough terrain while maintaining the stiffness of the recessed block 25 to maintain performance on a paved road.

The above-described features of the recessed block 25 can be applied to any of the recessed blocks 25 included in the first block group 11 and the second block group 12.

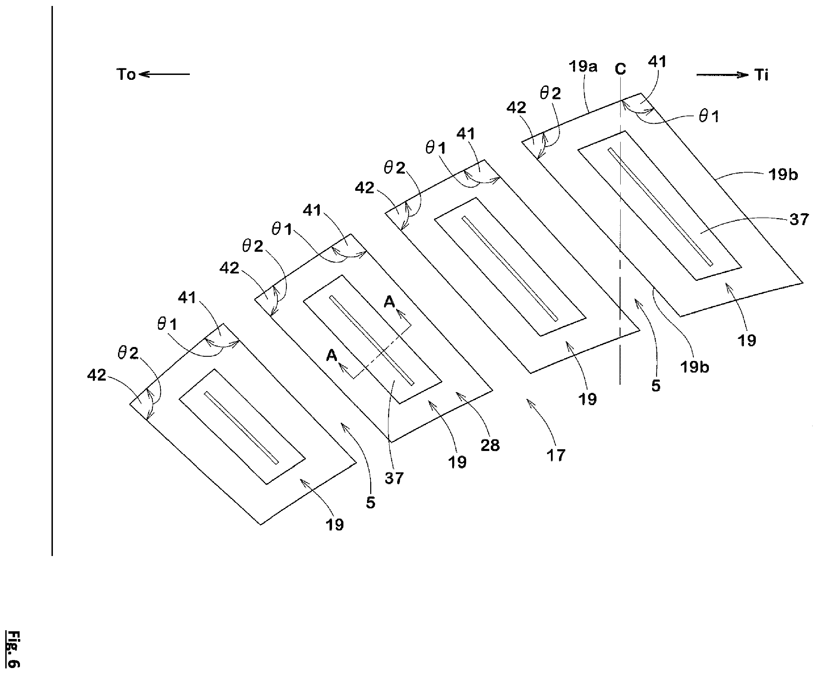

FIG. 6 shows an enlarged view of the longitudinally elongated block arrangement region 17 of the second block group 12. As shown in FIG. 6, the ground-contact surface of each of the longitudinally elongated blocks 19 included in the longitudinally elongated block arrangement region 17 includes an inner corner 41 and an outer corner 42. The inner corner 41 is a corner between a lateral edge 19a and a circumferential edge 19b on the inner tread end Ti side. The outer corner 42 is a corner between the lateral edge 19a and a circumferential edge 19b on the outer tread end To side.

In the longitudinally elongated block arrangement region 17, the longitudinally elongated block 19 located closer to the inner tread end Ti has a larger angle θ1 of the inner corner 41. Specifically, the angle θ1 of each inner corner 41 is, for example, 90 to 120°. Accordingly, each longitudinally elongated block 19 included in the longitudinally elongated block arrangement region 17 provides a frictional force in multiple directions, which improves controllability during cornering.

From the same viewpoint, in the longitudinally elongated block arrangement region 17, the longitudinally elongated block 19 located closer to the outer tread end To has a larger angle θ2 of the outer corner 42. Specifically, the angle θ2 of each outer corner 42 is, for example, 60 to 90°.

When the angle θ1 of the inner corner 41 and the angle θ2 of the outer corner 42 included in one longitudinally elongated block 19 are compared to each other, it is preferable that the angle θ1 of the inner corner 41 is larger than the angle θ2 of the outer corner 42. In a further preferable mode, the relationship between these angles is established in each longitudinally elongated block 19 included in the longitudinally elongated block arrangement region 17. Accordingly, excellent traction performance is exhibited while uneven wear of the inner corner 41 is suppressed.

In the present embodiment, the difference θ1 - θ2 between the angle θ1 and the angle θ2 is the maximum at the block closest to the inner tread end Ti, and is the minimum at the block closest to the outer tread end To. The maximum value of the difference θ1 - θ2 is, for example, 30 to 45°, and the minimum value of the difference θ1 - θ2 is, for example, 3 to 12°.

In one longitudinally elongated block arrangement region 17, it is preferable that the area of the ground-contact surface of the longitudinally elongated block 19 located closer to the outer tread end To is smaller. Accordingly, the longitudinally elongated block 19 closer to the outer tread end To relatively easily becomes deformed, so that not only controllability during cornering but also anti-wandering performance are improved.

The ground-contact surface of the non-recessed block 28 (synonymous with the longitudinally elongated block 19 in the present embodiment) has one second termination groove 37 terminating without being connected at both ends thereof to the lateral groove 3 and the circumferential groove 5. The second termination groove 37 is, for example, inclined in the same direction as the circumferential groove 5, and extends along the circumferential groove 5 in the present embodiment. Specifically, the difference between an angle of the second termination groove 37 with respect to the tire axial direction and the angle of the circumferential groove 5 with respect to the tire axial direction is not greater than 5°. Such a second termination groove 37 provides traction during running on rough terrain.

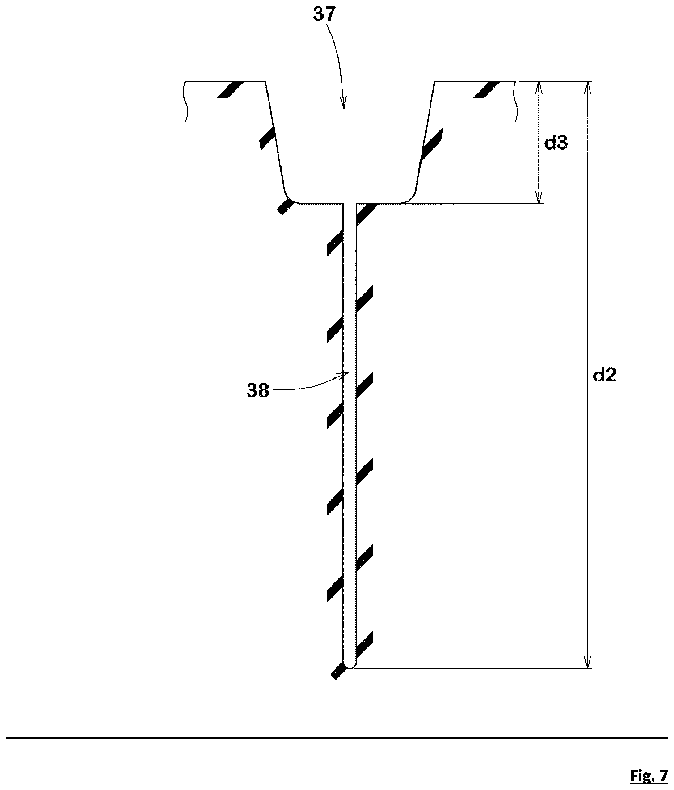

FIG. 7 shows a cross-sectional view taken along a line A-A in FIG. 6. As shown in FIG. 7, the second termination groove 37 has a groove bottom sipe 38 which is open in a bottom surface thereof and which extends in the tire radial direction. In the present specification, the "sipe" refers to a small-width slit having a width of 1.5 mm or less between two inner walls. The second termination groove 37 having such a groove bottom sipe 38 serves to further improve grip performance on rough terrain.

A maximum depth d3 of the second termination groove 37 excluding the groove bottom sipe 38 is, for example, 10% to 25% and preferably 15% to 20% of the maximum depth of the lateral groove 3. Meanwhile, the groove bottom sipe 38 has a depth that is 4.0 to 5.0 times the maximum depth d3 of the second termination groove 37. Accordingly, a maximum depth d2 from the ground-contact surface of the block to the bottom of the groove bottom sipe 38 is according to the invention 75% to 90% and preferably 80% to 85% of the maximum depth of the lateral groove 3. Such a second termination groove 37 and such a groove bottom sipe 38 can provide a great side grip while preventing a reduction in the stiffness of the block. Therefore, running performance on rough terrain can be improved without impairing steering stability on a paved road.

As shown in FIG. 1, between the inner tread end Ti and the circumferential groove 5 provided closest to the inner tread end Ti, circumferential termination sipes 48 are provided so as to extend parallel to the tire circumferential direction and terminate without being connected at both ends thereof to the lateral grooves 3. Such circumferential termination sipes 48 serve to further enhance side grip. The maximum depth of each circumferential termination sipe 48 is preferably not less than 50% and more preferably not less than 90%, and is preferably not greater than the 100%, of the maximum depth of the circumferential groove 5 provided closest to the inner tread end Ti. As a further preferable mode, the maximum depth of each circumferential termination sipe 48 of the present embodiment is equal to the maximum depth of the circumferential groove 5. The stiffness of the land portion can be maintained since such a circumferential termination sipe 48 terminates at both ends within the land portion, while a large side grip can be provided during cornering since the depth of such a circumferential termination sipe 48 is large.

Meanwhile, there is no groove, sipe, etc., between the outer tread end To and the circumferential groove 5 provided closest to the outer tread end To. Accordingly, uneven wear in the vicinity of the outer tread end To is suppressed.

Although the tire according to the embodiment of the present invention has been described in detail above, the present invention is not limited to the above specific embodiment, and various modifications can be made to implement the present invention as defined in the claims.

### EXAMPLES

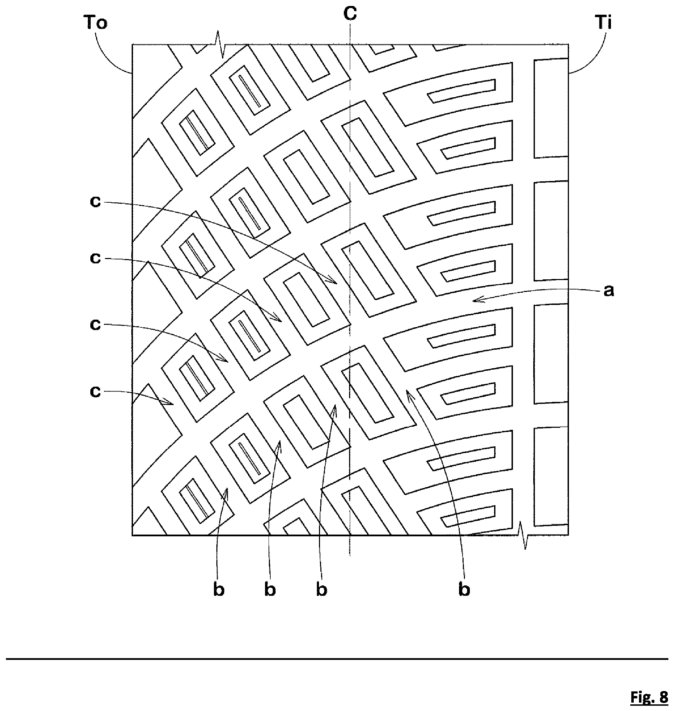

A pneumatic tire with a size of 205/65R15 having the basic pattern in FIG. 1 was produced as a test tire. Meanwhile, as a comparative example, a tire having a pattern shown in FIG. 8 was produced as a test tire. As shown in FIG. 8, in the tire of the comparative example, as for first circumferential grooves b and second circumferential grooves c adjacent to each other across one lateral groove a, connection positions of the circumferential grooves b and c to the lateral groove a coincide with each other. In addition, the tire of the comparative example is substantially the same as the tire of the example, except for the above matters. Moreover, these test tires were tested for controllability during cornering and side grip. The common specifications and the test method for the respective test tires are as follows.
Mount rim: 15×7.0J
Tire internal pressure: 200 kPa for all wheels
Test vehicle: four-wheel-drive vehicle having an engine displacement of 2000 cc
Tire mounted position: all wheels

### <Controllability during Cornering and Side Grip>

The above-described test vehicle was driven on a 2.5 km off-road test course, and sensory evaluation was made for controllability during cornering and side grip. The results are shown by scores with each performance of the comparative example being regarded as 100, and a higher value indicates that each performance is better.

The test results are shown in Table 1.

**[Table 1]**

| | Comparative Example | Example |
|---|---|---|
| Drawing showing tread pattern | FIG. 8 | FIG. 1 |
| Controllability during cornering (score) | 100 | 104 |
| Side grip (score) | 100 | 104 |

As shown in Table 1, it is confirmed that the tire of the example has improved controllability during cornering. In addition, it is confirmed that the tire of the example also has improved side grip.

## Claims

1. A tire (1) comprising a tread portion (2) having a designated mounting direction to a vehicle, wherein
the tread portion (2) includes an outer tread end (To) located on an outer side of the vehicle when the tire (1) is mounted to the vehicle, an inner tread end (Ti) located on an inner side of the vehicle when the tire (1) is mounted to the vehicle, a plurality of lateral grooves (3) continuously extending from the outer tread end (To) to the inner tread end (Ti), and a plurality of circumferential grooves (5) extending in a direction crossing the lateral grooves (3),
each region between the lateral grooves (3) adjacent to each other in a tire circumferential direction and between the outer tread end (To) and the inner tread end (Ti) forms a block group (10) in which a plurality of blocks are arranged by the plurality of circumferential grooves (5) being arranged so as to connect the lateral grooves (3),
the block groups (10) include a first block group (11) and a second block group (12) adjacent to the first block group (11) across one of the plurality of lateral grooves (3),
the first block group (11) has a plurality of first circumferential grooves (6) formed as the plurality of circumferential grooves (5),
the second block group (12) has a plurality of second circumferential grooves (7) formed as the plurality of circumferential grooves (5), and
a connection position (6c) of each of the plurality of first circumferential grooves (6) to said one of the plurality of lateral grooves (3) and a connection position (7c) of each of the plurality of second circumferential grooves (7) to said one of the plurality of lateral grooves (3) are different from each other in a length direction of the lateral groove (3);
ground-contact surfaces of the plurality of blocks included in the second block group (12) each include a lateral edge (14a) defined by one of the plurality of lateral grooves (3), and two circumferential edges (14b) defined by the two second circumferential grooves (7),
the second block group (12) includes a longitudinally elongated block arrangement region (17) in which longitudinally elongated blocks (19) in each of which each of lengths of the two circumferential edges (14b) is larger than a length of the lateral edge (14a) are aligned along the lateral groove (3),
each of ground-contact surfaces of the longitudinally elongated blocks (19) included in the longitudinally elongated block arrangement region (17) includes an inner corner (41) between the lateral edge (14a) and the circumferential edge (14b) on the inner tread end (Ti) side, and
in the longitudinally elongated block arrangement region (17), the longitudinally elongated block (19) located closer to the inner tread end (Ti) has a larger angle (θ1) of the inner corner (41);
wherein each of the ground-contact surfaces of the longitudinally elongated blocks (19) has one second termination groove (37) terminating without being connected at both ends thereof to the lateral groove (3) and the circumferential groove (5),
**characterized in that**
the second termination groove (37) has a groove bottom sipe (38) that is open in a bottom surface of the second termination groove (37) and that extends in a tire radial direction, and
a maximum depth (d2) from the ground-contact surface of the longitudinally elongated block (19) to a bottom of the groove bottom sipe (38) is 75% to 90% of a maximum depth of the lateral groove (3).

2. The tire (1) according to claim 1, wherein
the plurality of second circumferential grooves (7) include connection portions (45) to said one of the plurality of lateral grooves (3), and
in a tread plan view, each of virtual extension lines of groove center lines of the plurality of first circumferential grooves (6) does not overlap any of the connection portions (45) of the plurality of second circumferential grooves (7).

3. The tire (1) according to claim 1 or 2, wherein
each of the plurality of first circumferential grooves (6) and the plurality of second circumferential grooves (7) includes a connection portion (45) to said one of the plurality of lateral grooves (3), and
in a tread plan view, an overlap length between each of first regions (46) obtained by virtually extending the connection portions (45) of the plurality of first circumferential grooves (6) in a length direction of the first circumferential grooves (6) and each of the connection portions (45) of the plurality of second circumferential grooves (7) is not greater than 30% of a groove width of each connection portion (45) of the second circumferential grooves (7).

4. The tire (1) according to any one of claims 1 to 3, wherein
each of the ground-contact surfaces of the longitudinally elongated blocks (19) included in the longitudinally elongated block arrangement region (17) includes an outer corner (42) between the lateral edge (14a) and the circumferential edge (14b) on the outer tread end (To) side, and
in the longitudinally elongated block arrangement region (17), the longitudinally elongated block (19) located closer to the outer tread end (To) has a larger angle (θ2) of the outer corner (42).

5. The tire (1) according to any one of claims 1 to 4, wherein the angle (θ1) of the inner corner (41) is 90 to 120°.

6. The tire (1) according to any one of claims 1 to 5, wherein the angle (θ2) of the outer corner (42) is 60 to 90°.

7. The tire (1) according to any one of claims 1 to 6, wherein, in the longitudinally elongated block arrangement region (17), the longitudinally elongated block (19) located closer to the outer tread end (To) has a smaller area of the ground-contact surface.

8. The tire (1) according to any one of claims 1 to 7, wherein
the tread portion (2) has a designated rotation direction, and
the plurality of lateral grooves (3) each have an arc shape that is convex toward the rotation direction.

9. The tire (1) according to any one of claims 1 to 8, wherein
the first block group (11) includes at least one recessed block (25),
the recessed block (25) has a recess (26) formed so as to be locally recessed at a lateral edge (25a) defined by the lateral groove (3), and
a maximum depth in a tire radial direction of the recess (26) is not less than 50% of a maximum depth of the lateral groove (3).

10. The tire (1) according to claim 9, wherein
a ground-contact surface of the recessed block (25) has one first termination groove (36) terminating without being connected at both ends thereof to the lateral groove (3) and the circumferential groove (5), and
a maximum depth of the first termination groove (36) is 10% to 25% of the maximum depth of the lateral groove (3).

## Patentansprüche

1. Reifen (1), umfassend einen Laufflächenabschnitt (2) mit einer bestimmten Montagerichtung an einem Fahrzeug, wobei
der Laufflächenabschnitt (2) ein äußeres Laufflächenende (To), das sich an einer Außenseite des Fahrzeugs befindet, wenn der Reifen (1) an dem Fahrzeug montiert ist, ein inneres Laufflächenende (Ti), das sich an einer Innenseite des Fahrzeugs befindet, wenn der Reifen (1) an dem Fahrzeug montiert ist, eine Vielzahl von Querrillen (3), die sich kontinuierlich von dem äußeren Laufflächenende (To) zu dem inneren Laufflächenende (Ti) erstrecken, und eine Vielzahl von Umfangsrillen (5), die sich in einer Richtung erstrecken und die Querrillen (3) kreuzen, umfasst,
jeder Bereich zwischen den Querrillen (3), die in einer Reifenumfangsrichtung benachbart zueinander sind, und zwischen dem äußeren Laufflächenende (To) und dem inneren Laufflächenende (Ti) eine Blockgruppe (10) bildet, in der eine Vielzahl von Blöcken angeordnet sind, indem die Vielzahl von Umfangsrillen (5) so angeordnet sind, dass sie die Querrillen (3) verbinden,
die Blockgruppen (10) eine erste Blockgruppe (11) und eine zweite Blockgruppe (12), die über eine der Vielzahl von Querrillen (3) zu der ersten Blockgruppe (11) benachbart ist, umfassen,
die erste Blockgruppe (11) eine Vielzahl von ersten Umfangsrillen (6) aufweist, die als die Vielzahl von Umfangsrillen (5) gebildet sind,
die zweite Blockgruppe (12) eine Vielzahl von zweiten Umfangsrillen (7) aufweist, die als die Vielzahl von Umfangsrillen (5) gebildet sind, und
eine Verbindungsposition (6c) jeder der Vielzahl von ersten Umfangsrillen (6) mit der einen der Vielzahl von Querrillen (3) und eine Verbindungsposition (7c) jeder der Vielzahl von zweiten Umfangsrillen (7) mit der einen der Vielzahl von Querrillen (3) in einer Längsrichtung der Querrille (3) voneinander verschieden sind;
Bodenkontaktflächen der Vielzahl von Blöcken, die in der zweiten Blockgruppe (12) enthalten sind, jeweils eine Querkante (14a), die durch eine der Vielzahl von Querrillen (3) definiert ist, und zwei Umfangskanten (14b), die durch die zwei zweiten Umfangsrillen (7) definiert sind, umfassen,
die zweite Blockgruppe (12) einen Anordnungsbereich (17) für in Längsrichtung längliche Blocke umfasst, in dem in Längsrichtung längliche Blöcke (19), in denen jeweils jede der Längen der zwei Umfangskanten (14b) größer als eine Länge der Querkante (14a) ist, entlang der Querrille (3) ausgerichtet sind,
jede der Bodenkontaktflächen der in Längsrichtung länglichen Blöcke (19), die in dem Anordnungsbereich (17) für in Längsrichtung längliche Blocke enthalten sind, eine innere Ecke (41) zwischen der Querkante (14a) und der Umfangskante (14b) auf der Seite des inneren Laufflächenendes (Ti) umfasst, und
in dem Anordnungsbereich (17) für in Längsrichtung längliche Blocke der in Längsrichtung längliche Block (19), der sich näher an dem inneren Laufflächenende (Ti) befindet, einen größeren Winkel (θ1) der inneren Ecke (41) aufweist;
wobei jede der Bodenkontaktflächen der in Längsrichtung länglichen Blöcke (19) eine zweite Abschlussrille (37) aufweist, die endet, ohne an ihren beiden Enden mit der Querrille (3) und der Umfangsrille (5) verbunden zu sein,
**dadurch gekennzeichnet, dass**
die zweite Abschlussrille (37) einen Rillenbodenfeineinschnitt (38) aufweist, der in einer Bodenfläche der zweiten Abschlussrille (37) offen ist und der sich in einer Reifenradialrichtung erstreckt, und
eine maximale Tiefe (d2) von der Bodenkontaktfläche des in Längsrichtung länglichen Blocks (19) zu einem Boden des Rillenbodenfeineinschnitts (38) 75 % bis 90 % einer maximalen Tiefe der Querrille (3) beträgt.

2. Reifen (1) nach Anspruch 1, wobei
die Vielzahl von zweiten Umfangsrillen (7) Verbindungsabschnitte (45) mit der einen der Vielzahl von Querrillen (3) umfassen, und
in einer Laufflächendraufsicht jede von virtuellen Verlängerungslinien von Rillenmittellinien der Vielzahl von ersten Umfangsrillen (6) keinen der Verbindungsabschnitte (45) der Vielzahl von zweiten Umfangsrillen (7) überlappt.

3. Reifen (1) nach Anspruch 1 oder 2, wobei
jede der Vielzahl von ersten Umfangsrillen (6) und der Vielzahl von zweiten Umfangsrillen (7) einen Verbindungsabschnitt (45) mit der einen der Vielzahl von Querrillen (3) umfasst, und
in einer Laufflächendraufsicht eine Überlappungslänge zwischen jedem von ersten Bereichen (46), die durch virtuelles Verlängern der Verbindungsabschnitte (45) der Vielzahl von ersten Umfangsrillen (6) in einer Längsrichtung der ersten Umfangsrillen (6) erhalten werden, und jedem der Verbindungsabschnitte (45) der Vielzahl von zweiten Umfangsrillen (7) nicht größer als 30 % einer Rillenbreite jedes Verbindungsabschnitts (45) der zweiten Umfangsrillen (7) ist.

4. Reifen (1) nach einem der Ansprüche 1 bis 3, wobei
jede der Bodenkontaktflächen der in Längsrichtung länglichen Blöcke (19), die in dem Anordnungsbereich (17) für in Längsrichtung längliche Blocke enthalten sind, eine äußere Ecke (42) zwischen der Querkante (14a) und der Umfangskante (14b) auf der Seite des äußeren Laufflächenendes (To) umfasst, und
in dem Anordnungsbereich (17) für in Längsrichtung längliche Blocke der in Längsrichtung längliche Block (19), der sich näher an dem äußeren Laufflächenende (To) befindet, einen größeren Winkel (θ2) der äußeren Ecke (42) aufweist.

5. Reifen (1) nach einem der Ansprüche 1 bis 4, wobei der Winkel (θ1) der inneren Ecke (41) 90 bis 120° beträgt.

6. Reifen (1) nach einem der Ansprüche 1 bis 5, wobei der Winkel (θ2) der äußeren Ecke (42) 60 bis 90° beträgt.

7. Reifen (1) nach einem der Ansprüche 1 bis 6, wobei in dem Anordnungsbereich (17) für in Längsrichtung längliche Blocke der in Längsrichtung längliche Block (19), der sich näher an dem äußeren Laufflächenende (To) befindet, eine kleinere Fläche der Bodenkontaktfläche aufweist.

8. Reifen (1) nach einem der Ansprüche 1 bis 7, wobei
der Laufflächenabschnitt (2) eine bestimmte Drehrichtung aufweist, und
die Vielzahl von Querrillen (3) jeweils eine Bogenform aufweisen, die in Richtung der Drehrichtung konvex ist.

9. Reifen (1) nach einem der Ansprüche 1 bis 8, wobei
die erste Blockgruppe (11) mindestens einen vertieften Block (25) umfasst,
der vertiefte Block (25) eine Vertiefung (26) aufweist, die so ausgebildet ist, dass sie an einer Querkante (25a), die durch die Querrille (3) definiert ist, lokal vertieft ist, und
eine maximale Tiefe in einer Reifenradialrichtung der Vertiefung (26) nicht weniger als 50 % einer maximalen Tiefe der Querrille (3) beträgt.

10. Reifen (1) nach Anspruch 9, wobei
eine Bodenkontaktfläche des vertieften Blocks (25) eine erste Abschlussrille (36) aufweist, die endet, ohne an ihren beiden Enden mit der Querrille (3) und der Umfangsrille (5) verbunden zu sein, und
eine maximale Tiefe der ersten Abschlussrille (36) 10 % bis 25 % der maximalen Tiefe der Querrille (3) beträgt.

## Revendications

1. Pneumatique (1) comprenant une portion formant bande de roulement (2) ayant par conception une direction de montage sur un véhicule, dans lequel la portion formant bande de roulement (2) inclut une extrémité de bande de roulement extérieure (To) située sur un côté extérieur du véhicule quand le pneumatique (1) est monté sur le véhicule, une extrémité de bande de roulement intérieure (Ti) située sur un côté intérieur du véhicule quand le pneumatique (1) est monté sur le véhicule, une pluralité de rainures latérales (3) s'étendant en continu depuis l'extrémité de bande de roulement extérieure (To) jusqu'à l'extrémité de bande de roulement intérieure (Ti), et une pluralité de rainures circonférentielles (5) s'étendant dans une direction croisant les rainures latérales (3),
chaque région entre les rainures latérales (3) adjacentes les unes aux autres dans une direction circonférentielle du pneumatique et entre l'extrémité de bande de roulement extérieure (To) et l'extrémité de bande de roulement intérieure (Ti) forme un groupe de blocs (10) dans lequel une pluralité de blocs sont agencés via la pluralité de rainures circonférentielles (5) qui sont agencées de manière à connecter les rainures latérales (3),
les groupes de blocs (10) incluent un premier groupe de blocs (11) et un second groupe de blocs (12) adjacent au premier groupe de blocs (11) à travers l'une de la pluralité de rainures latérales (3),
le premier groupe de blocs (11) a une pluralité de premières rainures circonférentielles (6) formées en tant que pluralité de rainures circonférentielles (5), et
le second groupe de blocs (12) a une pluralité de secondes rainures circonférentielles (7) formées en tant que pluralité de rainures circonférentielles (5), et
une position de connexion (6c) de chacune de la pluralité de premières rainures circonférentielles (6) à ladite une de la pluralité de rainures latérales (3) et une position de connexion (7c) de chacune de la pluralité de secondes rainures circonférentielles (7) à ladite une de la pluralité de rainures latérales (3) sont différentes l'une de l'autre dans une direction de la longueur de la rainure latérale (3) ;
des surfaces de contact au sol de la pluralité de blocs inclus dans le second groupe de blocs (12) incluent chacune un bord latéral (14a) défini par l'une de la pluralité de rainures latérales (3), et deux bords circonférentiels (14b) définis par les deux secondes rainures circonférentielles (7),
le second groupe de blocs (12) inclut une région d'agencement de blocs longitudinalement allongés (17) dans laquelle des blocs longitudinalement allongés (19), dans chacun desquels chacune des longueurs des deux bords circonférentiels (14b) est supérieure à une longueur du bord latéral (14a), sont alignés le long de la rainure latérale (3),
chacune des surfaces de contact au sol des blocs longitudinalement allongés (19) inclus dans la région d'agencement de blocs longitudinalement allongés (17) inclut un coin intérieur (41) entre le bord latéral (14a) et le bord circonférentiel (14b) sur le côté de l'extrémité de bande de roulement intérieure (Ti), et
dans la région d'agencement de blocs longitudinalement allongés (17), le bloc longitudinalement allongé (19) situé plus proche de l'extrémité de bande de roulement intérieure (Ti) a un angle supérieur (θ1) du coin intérieur (41) ;
dans lequel
chacune des surfaces de contact au sol des blocs longitudinalement allongés (19) a une seconde rainure de terminaison (37) qui se termine sans être connectée au niveau des deux extrémités de celle-ci à la rainure latérale (3) et à la rainure circonférentielle (5),
**caractérisé en ce que**
la seconde rainure de terminaison (37) a une fente de fond de rainure (38) qui est ouverte dans une surface de fond de la seconde rainure de terminaison (37) et qui s'étend dans une direction radiale du pneumatique, et
une profondeur maximum (d2) depuis la surface de contact au sol du bloc longitudinalement allongé (19) jusqu'à un fond de la fente de fond de rainure (38) est de 75 % à 90 % d'une profondeur maximum de la rainure latérale (3).

2. Pneumatique (1) selon la revendication 1, dans lequel la pluralité de secondes rainures circonférentielles (7) incluent des portions de connexion (45) à ladite une de la pluralité de rainures latérales (3), et dans une vue en plan de la bande de roulement, chacune de lignes d'extension virtuelles de lignes centrales de rainures de la pluralité de premières rainures circonférentielles (6) ne chevauche aucune des portions de connexion (45) de la pluralité de secondes rainures circonférentielles (7).

3. Pneumatique (1) selon la revendication 1 ou 2, dans lequel
chacune de la pluralité de premières rainures circonférentielles (6) et de la pluralité de secondes rainures circonférentielles (7) inclut une portion de connexion (45) à ladite une la pluralité de rainures latérales (3), et
dans une vue en plan de la bande de roulement, une longueur de chevauchement entre chacune de premières régions (46) obtenue par extension virtuelle des points de connexion (45) de la pluralité de premières rainures circonférentielles (6) dans une direction de la longueur des premières rainures circonférentielles (6) et chacune des portions de connexion (45) de la pluralité de secondes rainures circonférentielles (7) n'est pas supérieure à 30 % d'une largeur de rainure de chaque portion de connexion (45) des secondes rainures circonférentielles (7).

4. Pneumatique (1) selon l'une quelconque des revendications 1 à 3, dans lequel
chacune des surfaces de contact au sol des blocs longitudinalement allongés (19) inclus dans la région d'agencement de blocs longitudinalement allongés (17) inclut un coin extérieur (42) entre le bord latéral (14a) et le bord circonférentiel (14b) sur le côté de l'extrémité de bande de roulement extérieure (To), et
dans la région d'agencement de blocs longitudinalement allongés (17), le bloc longitudinalement allongé (19) situé plus proche de l'extrémité de bande de roulement extérieure (To) a un angle supérieur (θ2) du coin extérieur (42).

5. Pneumatique (1) selon l'une quelconque des revendications 1 à 4, dans lequel l'angle (θ1) du coin intérieur (41) est de 90 à 120°.

6. Pneumatique (1) selon l'une quelconque des revendications 1 à 5, dans lequel l'angle (θ2) du coin extérieur (42) est de 60 à 90°.

7. Pneumatique (1) selon l'une quelconque des revendications 1 à 6, dans lequel, dans la région d'agencement de blocs longitudinalement allongés (17), le bloc longitudinalement allongé (19) situé plus proche de l'extrémité de bande de roulement extérieure (To) a une aire inférieure de la surface de contact au sol.

8. Pneumatique (1) selon l'une quelconque des revendications 1 à 7, dans lequel
la portion formant bande de roulement (2) a une direction de rotation par conception, et
la pluralité de rainures latérales (3) ont chacune une forme d'arc qui est convexe vers la direction de rotation.

9. Pneumatique (1) selon l'une quelconque des revendications 1 à 8, dans lequel
le premier groupe de blocs (11) inclut au moins un bloc évidé (25),
le bloc évidé (25) a un évidement (26) formé de manière à être évidé localement au niveau d'un bord latéral (25a) défini par la rainure latérale (3), et
une profondeur maximum dans une direction radiale du pneumatique de l'évidement (26) n'est pas inférieure à 50 % d'une profondeur maximum de la rainure latérale (3).

10. Pneumatique (1) selon la revendication 9, dans lequel
une surface de contact au sol du bloc évidé (25) a une première rainure de terminaison (36) qui se termine sans être connectée au niveau des deux extrémités de celle-ci à la rainure latérale (3) et à la rainure circonférentielle (5), et
une profondeur maximum de la première rainure de terminaison (36) est de 10 % à 25 % de la profondeur maximum de la rainure latérale (3).
